# EUROPEAN PATENT SPECIFICATION

(11) **EP 4 308 414 B1**
(45) Date of publication and mention of the grant of the patent: **06.08.2025**
(21) Application number: 23727098.8
(22) Date of filing: 22.05.2023
(51) Int. Cl.: B60N 2/56, B60N 2/70

(54) **VEHICLE COCKPIT COMPONENT PROVIDED WITH AN IMPROVED HEATING AND COOLING DEVICE**
COCKPIT-BAUTEIL EINES FAHRZEUGS, DAS MIT EINER VERBESSERTEN HEIZ- UND KÜHLVORRICHTUNG AUSGESTATTET IST
COMPOSANT DE POSTE DE PILOTAGE DE VÉHICULE POURVU D'UN DISPOSITIF DE CHAUFFAGE ET DE REFROIDISSEMENT AMÉLIORÉ

(30) Priority: 31.05.2022 IT 202200011558
(43) Date of publication of application: 24.01.2024
(73) Proprietor: MFI Italy Engineering S.r.l., 20121 Milano (IT)
(72) Inventor: ALTUN, Ömer, 10095 Grugliasco (TO) (IT); BORRI, Marco, 10095 Grugliasco (TO) (IT); SERRA, Tiziano, 10095 Grugliasco (TO) (IT); FILIDDANI, Gianluca, 10095 Grugliasco (TO) (IT)
(74) Representative: Robba, Pierpaolo
(86) International application number: PCT/IB2023/055244
(87) International publication number: WO 2023/233237

(56) References cited:
- US-A1- 2020 013 940
- US-A1- 2022 093 838
- US-B2- 10 759 312

## Description

### Technical Field of the Invention

The present invention relates to a vehicle cockpit component provided with an improved heating and cooling device.

More particularly, though not exclusively, the present invention relates to a vehicle seat provided with an improved heating and cooling device.

The present invention relates to a vehicle cockpit component provided with a heating and cooling device which is inherent to the structure of the vehicle cockpit component, e.g., of the vehicle seat.

### Prior Art

Vehicle seats equipped with heating and/or cooling devices for improving the user's comfort are known to the state of the art and widely used.

In general, such heating and/or cooling devices are made by using components which are separate from and independent of the vehicle seat and are incorporated into the vehicle seat during the assembling process thereof.

By way of example, in the case of devices capable of performing only the heating function, known solutions may envisage electric plates which are arranged between the upholstery and the padding of the vehicle seat at the cushion region and/or at the backrest region.

If, instead, the possibility of both heating and cooling the seat as needed is desired, known solutions envisage systems capable of generating an air flow at controlled temperature and circulating it inside the seat.

The known devices mentioned above have several drawbacks.

First of all, they require significant energy consumption for reaching and maintaining the desired temperature, sufficient for ensuring the user's comfort.

Secondly, they have relevant thermal inertia, so that a quite long time is needed for reaching the desired temperature.

Moreover, the presence of the additional components of such heating devices involves an increase in manufacturing costs and times, as well as in risks of failures and malfunctioning caused by incorrect assembly of such additional components in the vehicle seat.

Last but not least, there is a constant request for reducing the weight of the elements of the vehicle cockpit, namely of the vehicle seats, and it is evident that the presence of the components of the heating devices involves additional weight, which is not desirable because it would involve an increase in carbon dioxide emissions.

It is evident from the above brief description that the drawbacks listed above are particularly pronounced in the case of devices capable of both heating and cooling the vehicle seat. Indeed, said devices will have to include not only means for generating an air flow through the cushion and/or backrest of the vehicle seat (such as, for example, a fan with corresponding motor), but also a system of ducts for circulating said air flow through the cushion and/or backrest of the vehicle seat.

Document WO 2022/029602, in the name of the Applicant, discloses a vehicle seat component in which the padding and/or upholstery of the seat are made by using a polyurethane foam charged and/or impregnated with an electrically conductive filler. The electrically conductive particles present in the polyurethane foam can be subjected to an electric potential difference, so as to generate heat by virtue of the Joule effect.

Owing to the fact that the solution disclosed in WO 2022/029602 uses the Joule effect, although it can generate effective heating of a seat or other vehicle cockpit component, it is incapable of cooling said seat or said component.

Document US 10 759 312 discloses a vehicle trim assembly having a foam bun, an electrically insulative top finish layer above the foam bun, a thermal gradient assembly under the finish trim layer, and a thermal enhancement layer between the thermal gradient assembly and the finish trim layer. The thermal gradient assembly is adapted to generate a thermal gradient when receiving an electric current according to the Peltier effect. The thermal gradient has an electrically conductive top layer, an electrically conductive bottom layer, and a semiconductor layer having first and second semiconductor regions between the top and bottom layers. The thermal enhancement layer has a thermal conductivity adapted to direct thermal energy transfer between the thermal gradient assembly and the finish trim layer. At least one of the first or second semiconductor regions may be fabricated from an extrinsic foam material containing doped particles. The thermal enhancement layer may include a polyurethane foam layer, charged with an additive to direct thermal energy transfer through the thermal enhancement layer.

The trim assembly disclosed in US 10 759 312 does not allow overcoming all the drawbacks described above. In particular, it requires the provision of several additional components (thermal gradient assembly, thermal enhancement layer) other than the foam bun, which does not allow limiting production costs and times as well as the weight of the final product, nor avoiding risks of failures and malfunctioning caused by incorrect assembly of such additional components.

The main object of the present invention is to overcome the limitations of prior art outlined above.

In particular, the object of the present invention is to provide a vehicle cockpit component, such as, for example, a vehicle seat, equipped with a system that is inherent to the structure of said vehicle cockpit component, does not involve introducing additional components, and allows obtainment of both heating and cooling of the vehicle cockpit component.

These and other objects are achieved with a vehicle cockpit component as claimed in the appended claims.

### Summary of the Invention

According to the invention, the vehicle cockpit component is provided with a heating and cooling which is incorporated in the padding and/or upholstery of said component and whose operation is based on the Peltier effect.

According to a preferred embodiment of the invention, said cockpit component is a vehicle seat. However, any other cockpit component equipped with a padding and/or upholstery (door inner panels, headliner, dashboard, etc.) might be suitable for embodying the invention.

As is known, the Peltier effect consists in generating a temperature difference by applying an electric voltage/current. If an electric voltage is applied to a Peltier element, the electric current generates a heat flow: one side of the Peltier element becomes cool, because energy is extracted from said side through the electric current, whereas the opposite side releases the extracted heat into the environment. By reversing the polarity of the electric supply voltage of the Peltier element, the cool side and the warm side of the Peltier element are reversed accordingly.

According to prior art, Peltier elements are made by alternately arranging semiconductor elements of the p-type and n-type connected by metal connectors, and the efficiency of the resulting device can be increased by adding multiple p-n joints in series.

The most used semiconductor materials for developing Peltier elements are mainly based on bismuth telluride/antimony telluride/bismuth selenide pairs.

However, besides being toxic, said materials are brittle and cannot be intrinsically flexible; in addition, they are very rare and extraction thereof requires large amounts of energy for small amounts of material. Furthermore, such material are heavier and difficult to process. For this set of reasons, they cannot be recommended for the manufacture of cockpit components, and in particular for the manufacture of vehicle seats.

Therefore, according to the invention, the padding and/or upholstery of the cockpit component comprises a foam element containing one or more intrinsically electrically conductive polymers (intrinsically conductive polymers = ICPs). More specifically, the inner surfaces of the open cells of the foam element are coated or impregnated with one or more intrinsically electrically conductive polymers.

Polymers generally are electrical insulators and are used as such. In order to make them electrically conductive, it is possible to charge them with powders of electroconductive metals (copper, silver or gold) or with graphite powder. Polymers are thus obtained that are commonly defined as extrinsically electrically conductive polymers (extrinsically conductive polymers = ECPs).

Intrinsically electrically conductive polymers (ICPs), instead, consist of molecules with conjugated bonds, which, owing to their structure, "intrinsically" have an electrically conductive nature and can be classified as semiconductors.

Said intrinsically electrically conductive polymers are altered so as to create regions with electric behavior of the p-type and regions with electric behavior of the n-type.

For example, intrinsically electrically conductive polymers could be chemically altered (for example, by means of oxidation and/or reduction techniques) to create p-type regions or n-type regions, respectively; alternatively, the polymers could be doped with electron-donating groups or electron-withdrawing groups to create p-type regions or n-type regions, respectively.

By creating p-type regions and n-type regions and connecting said regions by means of electrical connectors, the foam element can convert electric energy into thermal energy by virtue of the Peltier effect for the purpose of performing the function of heating/cooling a surface of the cockpit component.

In particular, in the case where the cockpit component is a cockpit seat, the foam element can convert electric energy into thermal energy by virtue of the Peltier effect for the purpose of performing the function of heating/cooling the vehicle seat surface facing the user.

Compared to the conventional heating/cooling devices described above, the device according to the invention has several obvious advantages.

In fact, compared to heating/cooling devices of known type for applications to vehicle seats, the device according to the invention provides the following advantages:
- reduction in the number of components, this entailing a simplification of the assembling process (and thus of the production time) of the cockpit component;
- reduction in the weight of the cockpit component;
- reduction in energy consumption, fuel saving and reduction in the emissions of carbon dioxide and greenhouse gases;
- increased sustainability, without negatively affecting performance and safety;

In addition, compared to traditional heating/cooling technologies used in vehicle seats and based on the use of fans/blowers, the device according to the invention provides the following advantages:
- elimination of moving fluids and, more generally, moving parts, this resulting in increased reliability;
- elimination of noise;
- reduced inertia and faster cooling/heating, this resulting in improved user's comfort.

### Brief Description of the Drawings

Further features and advantages of the invention will become more evident from the detailed description of some preferred embodiments thereof, given by way of nonlimiting examples, with reference to the annexed drawings, in which:
Figure 1a schematically shows a vehicle seat according to a first embodiment of the invention;
Figure 1b schematically shows a vehicle seat according to a second embodiment of the invention;
Figure 2 schematically shows, in a cross-sectional view and on an enlarged scale, a portion of a foam element of a vehicle seat according to Figure 1a or Figure 1b.

### Detailed Description of Some Embodiments of the Invention

The invention will be described by way of example below with reference to embodiments in which the heating/cooling device is applied to the cushion and the backrest of a vehicle seat.

However, such application should not be understood as limiting. On the contrary, the invention can be advantageously implemented to manufacture any other vehicle cockpit component comprising a padding and/or upholstery.

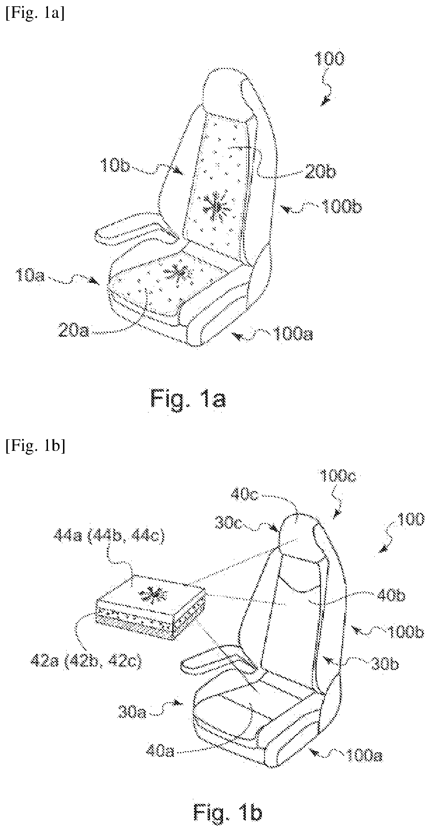

For example, the present invention could be implemented to manufacture inner panels of vehicle doors, or the headliner of a vehicle cockpit, or dashboard covering panels. Referring to Figure 1a, this shows a vehicle seat 100 comprising a cushion 100a and a backrest 100b.

Said vehicle seat comprises a first heating/cooling device 10a at the cushion 100a of the vehicle seat 100, and a second heating/cooling device 10b at the backrest 100b of the vehicle seat 100.

Both heating/cooling devices 10a, 10b are made by using the corresponding paddings 20a, 20b of the cushion 100a and of the backrest 100b of the vehicle seat 100.

Therefore, said heating/cooling devices 10a, 10b are incorporated in the structure of the vehicle seat 100 and do not involve incorporation of any additional elements.

According to the invention, the paddings 20a, 20b of the cushion 100a and the backrest 100b of the vehicle seat 100 consist, at least at one or more regions thereof, of a foam element containing intrinsically conductive polymers (ICPs), which are treated so as to form p-type regions and n-type regions; said foam element further comprises electrical connectors for connecting p-type regions and n-type regions, whereby the surface facing the user (i.e., facing the inside of the cockpit) of said paddings 20a, 20b can be alternatively heated or cooled by virtue of the Peltier effect by applying an appropriate power supply through said electrical connectors.

It will be apparent to the person skilled in the art that, by incorporating the heating/cooling device in the paddings 20a, 20b of the cushion 100a and the backrest 100b of the vehicle seat 100, the heating/cooling function adds up to the other functions that said paddings have to perform anyway in a conventional vehicle seat.

In particular, said paddings will have to be capable of supporting the user and ensuring comfort to said user.

In this respect, it can be noted that the solution of the present invention remarkably differs from the one disclosed in US 10 759 312: in said document, the function of supporting the user and ensuring the comfort of said user and the heating/cooling function are separated from each other and are performed by different components, i.e., the foam bun and the thermal gradient assembly, respectively; on the other hand, in the present invention both functions are integrated in and performed by one and the same component.

Moreover, in US 10759 312 the thermal gradient assembly of the vehicle trim assembly substantially has the function of boosting an additional thermal device such as a heat source or a heat sink, or in any case of improving the performance thereof; on the other hand, in the present invention the heating/cooling device is self-standing.

The Applicant therefore had to develop a solution allowing incorporation of the heating/cooling function in the foam elements of said paddings without deteriorating the mechanical strength and cushioning characteristics of said foam elements, which deterioration led - for example - to the exclusion of commonly known materials for the manufacture of Peltier elements.

Turning now to Figure 1b, this shows a vehicle seat 100 comprising a cushion 100a, a backrest 100b and a headrest 100c.

Said vehicle seat comprises a first heating/cooling device 30a at the cushion 100a of the vehicle seat 100, a second heating/cooling device 30b at the backrest 100b of the vehicle seat 100, and a third heating/cooling device 30c at the headrest 100c of the vehicle seat 100. The heating/cooling devices 30a, 30b, 30c are made by using corresponding upholsteries 40a, 40b, 40c of the cushion 100a, the backrest 100b and the headrest of the vehicle seat 100.

Therefore, in this case too, said heating/cooling devices 30a, 30b, 30c are incorporated in the structure of the vehicle seat 100 and do not involve incorporation of any additional elements.

According to the invention, the upholsteries 40a, 40b, 40c of the cushion 100a, the backrest 100b and the headrest 100c of the vehicle seat 100 consist, at least at one or more regions thereof, of a foam element containing intrinsically electrically conductive polymers (ICPs). In a preferred embodiment of the invention, the upholsteries 40a, 40b, 40c of the cushion 100a, the backrest 100b and the headrest 100c of the vehicle seat 100 are made as a multilayer structure comprising, among others, a layer 42a, 42b, 42c formed by a foam element and coupled by lamination to a layer 44a, 44b, 44c of outer aesthetic material (made, for example, of polyester, polyamide, leather and the like).

The foam element layer 42a, 42b, 42c forms the foam element containing the intrinsically electrically conductive polymers, which are treated so as to form p-type regions and n-type regions; said foam element layer further comprises electrical connectors for connecting regions of p-type and regions of n-type, whereby the surface facing the user (i.e., facing the inside of the cockpit) of said upholsteries 40a, 40b, 40c can be alternatively heated or cooled by virtue of the Peltier effect by applying an appropriate power supply through said electrical connectors.

It will be apparent to the person skilled in the art that, by incorporating the heating/cooling device into the upholsteries 40a, 40b, 40c of the cushion 100a, the backrest 100b and the headrest 100c of the vehicle seat 100, the heating/cooling function adds up to the other functions that said upholsteries have to perform anyway in a conventional vehicle seat.

In particular, said upholsteries will have to be capable of supporting the user and ensuring comfort to said user while simultaneously being resistant to wear and rubbing.

In other words, unlike in solutions of the type described in US 10 759 312, the foam element layer 42a, 42b, 42c containing the intrinsically conductive polymers is directly coupled to the layer of outer aesthetic material 44a, 44b, 44c, without interposition of any additional components.

In respect of this second embodiment, too, the Applicant thus had to develop a solution allowing incorporation of the heating/cooling function in the layers consisting of foam elements of said upholsteries without deteriorating the mechanical strength and cushioning characteristics of said upholsteries, which deterioration led - again - to the exclusion of commonly known materials for the manufacture of Peltier elements.

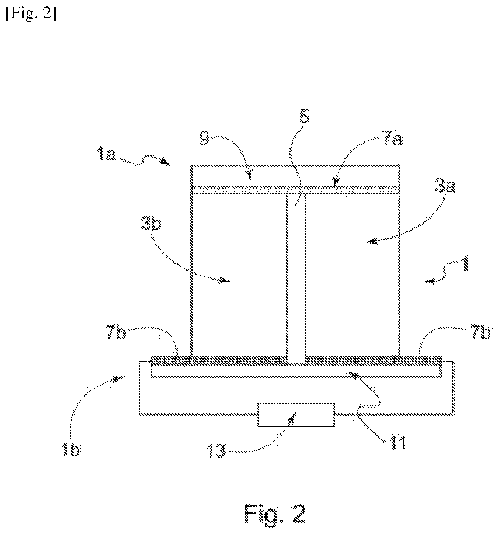

Figure 2 shows very schematically a portion of a foam element 1 that can be used for manufacturing a padding 20a, 20b of the type shown in Figure 1a or a layer 42a, 42b, 42c of an upholstery 40a, 40b, 40c of the type shown in Figure 1b.

The foam element 1 will in any case comprise a first face 1a facing the user (i.e., facing the inside of the cockpit) and a second, opposite face 1b, facing away from the user.

The foam element 1 is divided in a plurality of first blocks 3a extending from the first face 1a of said foam element 1 to the second face 1b of said foam element 1 and a plurality of second blocks 3b also extending from the first face 1a of said foam element 1 to the second face 1b of said foam element 1, the first blocks 3a and the second blocks 3b being alternated to each other in a "checkerboard" arrangement and being separated from each other by gaps 5.

According to the invention, the foam element 1 contains intrinsically electrically conductive polymers (ICPs), and in the first blocks 3a said intrinsically electrically conductive polymers are treated so as to obtain p-type regions, whereas in the second blocks 3b said intrinsically electrically conductive polymers are treated so as to obtain n-type regions. The gaps 5 can be empty or alternatively filled with a "neutral" foam, i.e., a foam free of electrically conductive polymers.

According to a preferred embodiment, the foam element 1 is made of a polyurethane foam. The foam element, for example of polyurethane foam, is electrically insulating per se. According to a preferred embodiment, the intrinsically electrically conductive polymers are selected from the group comprising:
- polythiophenes and derivatives thereof;
- polyacetylenes and derivatives thereof;
- polyanilines and derivatives thereof;
- polypyrroles and derivatives thereof;
- polyphenylene vinylene and derivatives thereof;
- polyphenylene sulfide and derivatives thereof;
- poli(3,4-ethylenedioxythiophene) and derivatives thereof;
- poly(metal-ethylenetdithiolate) and poly(metal-ethylenetetrathiolate), and in particular poli(nickel- ethylenedithiolate) poli(nickel- ethylenetetrathiolate) and derivatives thereof;
- polydiketopyrrolopyrrole and derivatives thereof;
- polyisoindigo and derivatives thereof;
- polyperylene diimmide and derivatives thereof.

The intrinsically electrically conductive polymers could be combined with one another as a polymer mixture or blend.

The intrinsically electrically conductive polymers could possibly be charged with organic and/or inorganic particles which enhance the thermoelectric properties, such as carbon-based particles or inorganic semiconductors with a high Seebeck coefficient value.

The intrinsically electrically conductive polymers introduced in the first blocks 3a (p-type regions) and into the second blocks 3b (n-type regions) could be the same or different. The intrinsically electrically conductive polymers could be chemically altered (for example, by means of oxidation and/or reduction techniques) to create p-type regions and n-type regions in the first blocks 3a and the second blocks 3b, respectively.

Alternatively, the intrinsically electrically conductive polymers could be doped with electron-donating groups or electron-withdrawing groups to create p-type regions and n-type regions in the first blocks 3a and the second blocks 3b, respectively.

The intrinsically electrically conductive polymers are introduced into the foam element 1 by coating or impregnating therewith the cells of said foam element 1.

In particular, the cells of said foam element 1 could be partially coated / impregnated with said conductive polymers or also completely coated /impregnated therewith.

Alternatively, the intrinsically electrically conductive polymers are introduced in the composition recipe of the foam, thus obtaining in a single step a foam element charged with intrinsically electrically conductive polymers, without the need for additional coating or impregnating steps and with a corresponding reduction in production times.

The foam element 1 further comprises a plurality of first electrodes 7a connecting adjacent blocks 3a, 3b (of the cell shown in Figure 2) to each other at the end of said blocks facing the first face 1a of said foam element, and a plurality of second electrodes 7b connecting adjacent blocks 3a, 3b (of the adjacent cells not shown in Figure 2) to each other at the end of said blocks facing the second face 1b of said foam element.

According to the usual pattern of Peltier elements, and as visible in Figure 2, a pair of adjacent blocks 3a, 3b connected to an electrode at one of their ends are not connected to each other at their opposite end (in Figure 2 the adjacent blocks 3a, 3b are connected to each other by a first electrode 7a at their ends facing the first face 1a of the foam element and are not connected at their opposite ends, facing the second face 1b of the foam element).

The first and second electrodes 7a, 7b can be made according to any technology known to the person skilled in the art. For example, they could be made as metal elements, or by using conductive inks.

The heating/cooling device further comprises means for applying an electric voltage difference between the first electrodes 7a and the second electrodes 7b. Said means can also be incorporated in the foam element 1, or they can be arranged outside said element and be electrically connected to the first and second electrodes 7a, 7b.

By applying an electric voltage difference between the first and second electrodes 7a, 7b it is possible to obtain a temperature increase at one of the faces 1a, 1b of the foam element 1 (warm side of the Peltier element) and a corresponding temperature decrease at the opposite side 1b, 1a of said foam element 1 (cold side of the Peltier element). By reversing the polarity of the applied electric voltage, it is possible to reverse the warm side and cold side of the Peltier element accordingly.

Referring particularly to the first face 1a of the foam element 1 facing the user, by applying an electric voltage with appropriate polarity it will be possible to heat said first face when needed, whereas by applying an electric voltage with opposite polarity it will be possible to cool said first face when needed.

At its first face 1a, facing the user, the foam element 1 comprises, externally to the first electrodes 7a, a flat element 9 made of a thermally conductive material and allowing to make the temperature of the foam element at said first face uniform and homogeneous.

At its second face 1b, facing away from the user, the foam element 1 comprises, instead, externally to the second electrodes 7b, a heat sink 11.

The heating/cooling device further comprises a control unit 13 configured to control the operation of said devices, in particular the electric supply voltage supplied to the first and second electrodes 7a, 7b (including, of course, the polarity of said electric supply voltage). Said control unit 13 can also be incorporated in the foam element 1, or it can be arranged outside said foam element and connected (by means of wire connections or in a wireless manner) to the other components of the heating/cooling device.

Preferably, the heating/cooling device is equipped with a network of temperature sensors capable of providing the control unit 13 with the information necessary to control the electric supply voltage fed to the first and second electrodes so that the desired temperature at the first face 1a of the foam element 1 is obtained.

Said network of sensors (not shown in Figure 2) might include:
Detta rete di sensori (non illustrati in Figura 2) potrà comprendere:
- temperature sensors arranged at the first face 1a of the foam element;
- temperature sensors arranged at the second face 1b of the foam element;
- temperature sensors for detecting the temperature inside the cockpit of the vehicle;
- temperature sensors for detecting the temperature outside the vehicle.

Thanks to the information from said sensors, not only will the control unit be able to supply the electrodes 7a, 7b with an appropriate voltage, but it will also be able to control the temperature values at the opposite faces of the foam element and the difference between them, so that proper operation of the heating/cooling device, and in particular proper exploitation of the Peltier effect, is ensured.

It is evident that the detailed description provided above has been given by way of example and that numerous modifications and variations are possible without departing from the scope of protection of the invention as defined in the appended claims.

In detail, the materials used for manufacturing the foam element, the nature and concentrations of the intrinsically electrically conductive polymers, as well as the specific construction characteristics of the electrodes and the circuit connected thereto can be selected by the person skilled in the art based on their knowledge according to the specific application and the desired performance.

Furthermore, the invention can be applied to a wide range of components of a vehicle cockpit, including not only vehicle seats, but also the inner panels of vehicle doors, the headliner of the vehicle cockpit, the covering panels of the vehicle dashboard, and so on.

## Claims

1. Vehicle cockpit component (100), of the type comprising at least a padding (20a, 20b) and/or an upholstery (40a, 40b, 40c), wherein at least one of said padding (20a, 20b) and said upholstery (40a, 40b, 40c) comprises at least a foam element (1), said foam element (1) forming the padding or the upholstery of said vehicle cockpit component, respectively, at least at one or more regions of said padding or said upholstery, respectively, wherein said foam element comprises a first face (1a), facing the space inside the cockpit, and a second face (1b), opposite to said first face, wherein said vehicle cockpit component comprises a heating and cooling device, **characterized in that** said foam element (1) comprises intrinsically electrically conductive polymers (ICPs), which are treated so as to form alternated p-type and n-type regions within said foam element, and **in that** said heating and cooling device comprises first electrodes (7a) arranged at said first face (1a) of said foam element and second electrodes (7b) arranged at said second face (1b) of said foam element, as well as means for supplying an electrical supply voltage to said first electrodes (1a) and said second electrodes (7b), the polarity of said electrical supply voltage being reversible.

2. Vehicle cockpit component (100) according to claim 1, wherein said foam element (1) is divided into a plurality of first blocks (3a), extending from said first face of said foam element to said second face of said foam element, and a plurality of second blocks (3b), also extending from said first face of said foam element to said second face of said foam element, said first blocks (3a) and said second blocks (3b) being alternated to each other according to a "checkerboard" arrangement and being separated from each other by gaps (5), and wherein in said first blocks (3a) said intrinsically electrically conductive polymers are treated so as to obtain p-type regions, while in said second blocks (3b) said intrinsically electrically conductive polymers are treated so as to obtain n-type regions.

3. Vehicle cockpit component (100) according to claim 2, wherein said gaps (5) are empty, or they are filled with a foam free of intrinsically electrically conductive polymers.

4. Vehicle cockpit component (100) according to claim 2, wherein said first electrodes (7a) connect adjacent blocks (3a, 3b) to each other at the end of said blocks facing said first face (1a) of said foam element and said second electrodes (7b) connect adjacent blocks (3a, 3b) to each other at the end of said blocks facing said second face (1b) of said foam element, each pair of blocks formed by a first block, and a second adjacent block being connected alternatively either only by means of a first electrode or only by means of a second electrode.

5. Vehicle cockpit component (100) according to any of the preceding claims, wherein said foam element (1), at its first face (1a) and externally to said first electrodes (7a), comprises a flat element (9) made of a thermally conductive material, arranged to make the temperature of said foam element at said first face uniform and homogeneous.

6. Vehicle cockpit component (100) according to any of the preceding claims, wherein said foam element (1), at its second face (1b) and externally to said second electrodes (7b), comprises a heat sink (11).

7. Vehicle cockpit component (100) according to any of the preceding claims, wherein said heating and cooling device further comprises a control unit (13) arranged to control the operation of said device, namely the supply voltage supplied to said first and said second electrodes (7a, 7b).

8. Vehicle cockpit component (100) according to claim 7, wherein said heating and cooling device further comprises a network of temperature sensors, arranged to provide said control unit (13) with the temperature measurements carried out thereby and comprising temperature sensors arranged at said first face of said foam element, temperature sensors arranged at said second face of said foam element, temperature sensors for detecting the temperature inside the cockpit of the vehicle and/or temperature sensors for detecting the temperature outside the cockpit of the vehicle.

9. Vehicle cockpit component (100) according to any of the preceding claims, wherein said foam element contains intrinsically electrically conductive polymers selected from the group comprising:
- polythiophenes and derivatives thereof;
- polyacetylenes and derivatives thereof;
- polyanilines and derivatives thereof;
- polypyrroles and derivatives thereof;
- polyphenylene vinylene and derivatives thereof;
- polyphenylene sulfide and derivatives thereof;
- poly(3,4-ethylenedioxythiophene) and derivatives thereof;
- poly(metal-ethylenedithiolate) and poly(metal-ethylenetetrathiolate), and in particular poly(nickel- ethylenedithiolate) poly(nickel- ethylenetetrathiolate) and derivatives thereof;
- polydiketopyrrolopyrrole and derivatives thereof;
- polyisoindigo and derivatives thereof;
- polyperylene diimide and derivatives thereof;
or combinations thereof.

10. Vehicle cockpit component (100) according to any of the preceding claims, wherein said foam element contains intrinsically electrically conductive polymers charged with organic and/or inorganic particles.

11. Vehicle cockpit component (100) according to any of claims 1 - 10, wherein said intrinsically electrically conductive polymers treated so as to form alternated p-type and n-type regions within said foam element are chemically altered by means of oxidation and/or reduction techniques for obtaining said p-type regions and said n-type regions.

12. Vehicle cockpit component (100) according to any of claims 1 - 10, wherein said intrinsically electrically conductive polymers treated so as to form alternated p-type and n-type regions within said foam element are doped with electron-donating or electron-withdrawing groups for obtaining said p-type regions and said n-type regions.

13. Vehicle cockpit component (100) according to any of claims 1-12, wherein the cells of said foam element (1) are coated and/or impregnated, either partially or totally, with said intrinsically electrically conductive polymers.

14. Vehicle cockpit component (100) according to any of claims 1-12, wherein said intrinsically electrically conductive polymers are introduced as an ingredient into the composition recipe of said foam element (1).

15. Vehicle cockpit component (100) according to any of the preceding claims, wherein said foam element (1) forms said upholstery (40a, 40b, 40c) of said vehicle cockpit component at least at one or more regions of said upholstery, wherein said upholstery (40a, 40b, 40c) is provided with a layer of outer aesthetic material (44a, 44b, 44c), and wherein said foam element is directly coupled to said layer of outer aesthetic material (44a, 44b, 44c).

## Patentansprüche

1. Fahrzeug-Cockpit-Bauteil (100), des Typs mit mindestens einer Polsterung (20a, 20b) und/oder einem Bezug (40a, 40b, 40c), wobei mindestens die Polsterung (20a, 20b) oder mindestens der Bezug (40a, 40b, 40c) zumindest ein Schaumstoffelement (1) umfassen, wobei das Schaumstoffelement (1) die Polsterung bzw. den Bezug des Cockpit-Bauteils, zumindest in einem oder mehreren Bereichen der Polsterung bzw. des Bezugs, bildet, wobei das Schaumstoffelement eine erste dem Innenraum des Cockpits zugewandte Seite (1a) und eine zweite, dieser ersten Seite gegenüberliegende Seite (1b) aufweist, wobei das Fahrzeug-Cockpit-Bauteil eine Heiz- und Kühlvorrichtung umfasst, **dadurch gekennzeichnet, dass** das Schaumstoffelement (1) intrinsisch elektrisch leitfähige Polymere (ICPs) umfasst, die so behandelt sind, dass sie in dem Schaumstoffelement abwechselnde p-Typ-Bereiche und n-Typ-Bereiche bilden, **und dass** die Heiz- und Kühlvorrichtung erste an der ersten Seite (1a) des Schaumstoffelements angeordnete Elektroden (7a) und zweite an der zweiten Seite (1b) des Schaumstoffelements angeordnete Elektroden (7b), sowie Mittel zum Liefern einer elektrischen Versorgungsspannung an die ersten Elektroden (1a) und die zweiten Elektroden (7b) umfasst, wobei die Polarität der elektrischen Versorgungsspannung umschaltbar ist.

2. Fahrzeug-Cockpit-Bauteil (100) nach Anspruch 1, wobei das Schaumstoffelement (1) in eine Vielzahl von ersten Blöcken (3a), die sich von der ersten Seite des Schaumstoffelements zur zweiten Seite des Schaumstoffelements erstrecken, und eine Vielzahl von zweiten Blöcken (3b), die sich ebenfalls von der ersten Seite des Schaumstoffelements zur zweiten Seite des Schaumstoffelements erstrecken, unterteilt ist, wobei die ersten Blöcke (3a) und die zweiten Blöcke (3b) schachbrettartig abwechselnd angeordnet und durch Spalte (5) voneinander getrennt sind, und wobei in den ersten Blöcken (3a) die intrinsisch elektrisch leitfähige Polymere so behandelt sind, dass p-Typ-Bereiche entstehen, während in den zweiten Blöcken (3b) die intrinsisch elektrisch leitenden Polymere so behandelt sind, dass p-Typ-Bereiche entstehen.

3. Fahrzeug-Cockpit-Bauteil (100) nach Anspruch 2, wobei die Spalte (5) leer sind, oder mit einem Schaumstoff ohne intrinsisch elektrisch leitende Polymere gefüllt sind.

4. Fahrzeug-Cockpit-Bauteil (100) nach Anspruch 2, wobei die ersten Elektrode (7a) benachbarte Blöcke (3a, 3b) an den der ersten Seite (1a) des Schaumstoffelements zugewandten Enden dieser Blöcke miteinander verbinden, und die zweiten Elektrode (7b) benachbarte Blöcke (3a, 3b) an den der zweiten Seite (1b) des Schaumstoffelements zugewandten Enden dieser Blöcke miteinander verbinden, wobei jedes Paar von Blöcken bestehend aus einem ersten Block und einem zweiten benachbarten Block abwechselnd entweder nur über eine erste Elektrode oder nur über eine zweite Elektrode verbunden ist.

5. Fahrzeug-Cockpit-Bauteil (100) nach einem der vorhergehenden Ansprüche, wobei das Schaumstoffelement (1), auf seiner ersten Seite (1a) und außerhalb der ersten Elektroden (7a), ein aus einem wärmeleitenden Material bestehendes flaches Element (9) umfasst, das so beschaffen ist, dass die Temperatur des Schaumstoffelements auf der ersten Seite gleichmäßig und homogen ist.

6. Fahrzeug-Cockpit-Bauteil (100) nach einem der vorhergehenden Ansprüche, wobei das Schaumstoffelement (1), auf seiner zweiten Seite (1b) und außerhalb der zweiten Elektroden (7b), eine Wärmesenke (11) umfasst.

7. Fahrzeug-Cockpit-Bauteil (100) nach einem der vorhergehenden Ansprüche, wobei die Heiz- und Kühlvorrichtung eine Steuereinheit (13) weiter umfasst, die so beschaffen ist, dass sie den Betrieb der Vorrichtung, d. h. die an die ersten und die zweiten Elektroden (7a, 7b) gelieferte Versorgungsspannung, steuert.

8. Fahrzeug-Cockpit-Bauteil (100) nach Anspruch 7, wobei die Heiz- und Kühlvorrichtung ein Netz von Temperatursensoren weiter umfasst, die so beschaffen sind, dass sie die Steuereinheit (13) mit den von ihnen durchgeführten Temperaturmessungen versorgen und an der ersten Seite des Schaumstoffelements angeordnete Temperatursensoren, an der zweiten Seite des Schaumstoffelements angeordnete Temperatursensoren, Temperatursensoren zur Erfassung der Temperatur im Cockpit des Fahrzeugs und/oder Temperatursensoren zur Erfassung der Temperatur außerhalb des Fahrzeugcockpits umfassen.

9. Fahrzeug-Cockpit-Bauteil (100) nach einem der vorhergehenden Ansprüche, wobei das Schaumstoffelement intrinsisch elektrisch leitfähige Polymere enthält, die ausgewählt sind aus der Gruppe umfassend:
- Polythiophene und Derivate davon;
- Polyacetylene und Derivate davon;
- Polyaniline und Derivate davon;
- Polypyrrole und Derivate davon;
- Polyphenylenvinylen und Derivate davon;
- Polyphenylensulfid und Derivate davon;
- Poly(3,4-Ethylendioxythiophen) und Derivate davon;
- Poly(Metall-Ethylendithiolat) und Poly(Metall-Ethylentetrathiolat), und insbesondere Poly(Nickel- Ethylendithiolat) und Poly(Nickel-Ethylentetrathiolat), und Derivate davon;
- Polydiketopyrrolopyrrol und Derivate davon;
- Polyisoindigo und Derivate davon;
- Polyperylendiimid und Derivate davon;
oder deren Kombinationen.

10. Fahrzeug-Cockpit-Bauteil (100) nach einem der vorhergehenden Ansprüche, wobei das Schaumstoffelement intrinsisch elektrisch leitfähige Polymere enthält, die mit organischen und/oder anorganischen Partikeln beladen sind.

11. Fahrzeug-Cockpit-Bauteil (100) nach einem der Ansprüche 1 bis 10, wobei die zur Bildung von p-Typ-Bereichen und n-Typ-Bereichen innerhalb des Schaumstoffelements behandelte intrinsisch elektrisch leitfähige Polymere durch Oxidations- und/oder Reduktionstechniken chemisch verändert werden, um diese p-Typ- und n-Typ-Bereiche zu erhalten.

12. Fahrzeug-Cockpit-Bauteil (100) nach einem der Ansprüche 1 bis 10, wobei die zur Bildung von p-Typ-Bereichen und n-Typ-Bereichen innerhalb des Schaumstoffelements behandelte intrinsisch elektrisch leitfähige Polymere mit elektronenabgebenden oder elektronenabziehenden Gruppen dotiert werden, um diese p-Typ-Bereiche und n-Typ-Bereiche zu erhalten.

13. Fahrzeug-Cockpit-Bauteil (100) nach einem der Ansprüche 1 bis 12, wobei die Zellen des Schaumstoffelements (1) teilweise oder vollständig mit den intrinsisch elektrisch leitfähigen Polymeren beschichtet und/oder imprägniert sind.

14. Fahrzeug-Cockpit-Bauteil (100) nach einem der Ansprüche 1 bis 12, wobei die intrinsisch elektrisch leitfähige Polymere als Zutat in die Rezeptur der Zusammensetzung des Schaumstoffelements (11) eingebracht sind.

15. Fahrzeug-Cockpit-Bauteil (100) nach einem der vorhergehenden Ansprüche, wobei das Schaumstoffelement (1) den Bezug (40a, 40b, 40c) des Fahrzeug-Cockpit-Bauteils zumindest in einem oder mehreren Bereichen des Bezugs bildet, wobei der Bezug (40a, 40b, 40c) mit einem Schicht aus ästhetischem Außenmaterial (44a, 44b, 44c) versehen ist, und wobei das Schaumstoffelement mit diesem Schicht (44a, 44b, 44c) direkt verbunden ist.

## Revendications

1. Composant d'habitacle de véhicule (100), du type comprenant au moins un rembourrage (20a, 20b) et/ou une garniture (40a, 40b, 40c), dans lequel au moins l'un entre ce rembourrage (20a, 20b) et/ou cette garniture (40a, 40b, 40c) comprend au moins un élément en mousse (1), cet élément en mousse (1) formant respectivement le rembourrage ou la garniture de ce composant d'habitacle de véhicule au moins dans une ou plusieurs zones de ce rembourrage ou, respectivement, de cette garniture, cet élément en mousse comprenant une première face (1a), tournée vers l'espace à l'intérieur de l'habitacle, et une deuxième face (1b), opposée à cette première face, ce composant d'habitacle de véhicule comprenant un dispositif de chauffage et de refroidissement, **caractérisé en ce que** cet élément en mousse (1) comprend des polymères intrinsèquement conducteurs d'électricité (ICP), traités de manière à former des zones alternées de type p et de type n au sein de cet élément en mousse, **et en ce que** ce dispositif de chauffage et de refroidissement comprend des premières électrodes (7a) agencées sur cette première face (1a) de cet élément en mousse et des deuxièmes électrodes (7b) agencées sur cette deuxième face (1b) de cet élément en mousse, ainsi que des moyens pour fournir une tension d'alimentation électrique à ces premières électrodes (1a) et à ces deuxièmes électrodes (7b), la polarité de cette tension d'alimentation électrique étant réversible.

2. Composant d'habitacle de véhicule (100) selon la revendication 1, dans lequel cet élément en mousse (1) est divisé en une pluralité de premiers blocs (3a), s'étendant de cette première face à cette deuxième face, et une pluralité de deuxièmes blocs (3b), s'étendant également de cette première face à cette deuxième face, ces premiers blocs (3a) et ces deuxièmes blocs (3b) étant alternés les uns aux autres selon une disposition en damier et étant séparés les uns des autres par des interstices (5), et dans lequel ces polymères intrinsèquement conducteurs d'électricité dans ces premiers blocs (3a) sont traités pour obtenir des zones de type p, tandis que ces polymères intrinsèquement conducteurs d'électricité dans ces deuxièmes blocs (3b) sont traités pour obtenir des zones de type n.

3. Composant d'habitacle de véhicule (100) selon la revendication 2, dans lequel ces interstices (5) sont vides ou bien ils sont remplis d'une mousse exempte de polymères intrinsèquement conducteurs d'électricité.

4. Composant d'habitacle de véhicule (100) selon la revendication 2, dans lequel ces premières électrodes (7a) relient entre eux des blocs adjacents (3a, 3b) au niveau de l'extrémité de ces blocs tournée vers cette première face (1a) de cet élément en mousse, et ces deuxièmes électrodes (7b) relient entre eux des blocs adjacents (3a, 3b) au niveau de l'extrémité de ces blocs tournée vers cette deuxième face (1b) de cet élément en mousse, chaque paire de blocs formée par un premier bloc et par un deuxième bloc adjacent étant alternativement reliée soit uniquement par une première électrode, soit uniquement par une deuxième électrode.

5. Composant d'habitacle de véhicule (100) selon l'une quelconque des revendications précédentes, dans lequel cet élément en mousse (1), sur sa première face (1a) et à l'extérieur par rapport à ces premières électrodes (7a), comprend un élément plat (9) en matériau conducteur thermique, agencé pour rendre la température de cet élément en mousse uniforme et homogène sur cette première face.

6. Composant d'habitacle de véhicule (100) selon l'une quelconque des revendications précédentes, dans lequel cet élément en mousse (1), sur sa deuxième face (1b) et à l'extérieur par rapport à ces deuxièmes électrodes (7b), comprend un dissipateur thermique (11).

7. Composant d'habitacle de véhicule (100) selon l'une quelconque des revendications précédentes, dans lequel ce dispositif de chauffage et de refroidissement comprend en outre une unité de commande (13) conçue pour contrôler le fonctionnement de ce dispositif, à savoir la tension d'alimentation électrique fournie à ces premières et deuxièmes électrodes (7a, 7b).

8. Composant d'habitacle de véhicule (100) selon la revendication 7, dans lequel ce dispositif de chauffage et de refroidissement comprend en outre un réseau de capteurs de température, conçu pour fournir à cette unité de commande (13) les mesures de température effectuées par ces capteurs de température et comprenant des capteurs de température agencés sur cette première face de cet élément en mousse, des capteurs de température agencés sur cette deuxième face de cet élément en mousse, des capteurs de température pour détecter la température à l'intérieur de l'habitacle du véhicule et/ou des capteurs de température pour détecter la température à l'extérieur de l'habitacle du véhicule.

9. Composant d'habitacle de véhicule (100) selon l'une quelconque des revendications précédentes, dans lequel cet élément en mousse contient des polymères intrinsèquement conducteurs d'électricité choisis dans le groupe comprenant:
- les polythiophènes et leurs dérivés;
- les polyacétylènes et leurs dérivés;
- les polyanilines et leurs dérivés;
- les polypyrroles et leurs dérivés;
- le polyphénylène vinylène et ses dérivés;
- le sulfure de polyphénylène et ses dérivés;
- le poly(3,4-éthylènedioxythiophène) et ses dérivés;
- le poly(métal-éthylènedithiolate) et le poly(métal-éthylènetétrathiolate), et en particulier le poly(nickel-éthylènedithiolate) et le poly(nickel-éthylènetétrathiolate), et leurs dérivés;
- le polydicétopyrrolopyrrole et ses dérivés;
- le polyisoindigo et ses dérivés;
- polypérylène diimide et ses dérivés;
ou leurs combinaisons.

10. Composant d'habitacle de véhicule (100) selon l'une quelconque des revendications précédentes, dans lequel cet élément en mousse contient des polymères intrinsèquement conducteurs d'électricité chargés de particules organiques et/ou inorganiques.

11. Composant d'habitacle de véhicule (100) selon l'une quelconque des revendications 1 à 10, dans lequel ces polymères intrinsèquement conducteurs d'électricité traités de manière à former des régions alternées de type p et de type n au sein de cet élément en mousse sont chimiquement modifiés par des techniques d'oxydation et/ou de réduction pour obtenir ces régions de type p et de type n.

12. Composant d'habitacle de véhicule (100) selon l'une quelconque des revendications 1 à 10, dans lequel ces polymères intrinsèquement conducteurs d'électricité traités de manière à former des régions alternées de type p et de type n au sein de cet élément en mousse sont dopés avec des groupes électrodonneurs ou électroattracteurs pour obtenir ces régions de type p et de type n.

13. Composant d'habitacle de véhicule (100) selon l'une quelconque des revendications 1 à 12, dans lequel les cellules de cet élément en mousse (1) sont revêtues et/ou imprégnées, partiellement ou totalement, par ces polymères intrinsèquement conducteurs d'électricité.

14. Composant d'habitacle de véhicule (100) selon l'une quelconque des revendications 1 à 12, dans lequel ces polymères intrinsèquement conducteurs d'électricité sont introduits en tant qu'ingrédients dans la composition de cet élément en mousse (1).

15. Composant d'habitacle de véhicule (100) selon l'une quelconque des revendications précédentes, dans lequel cet élément en mousse (1) forme cette garniture (40a, 40b, 40c) de ce composant d'habitacle de véhicule au moins dans une ou plusieurs régions de cette garniture, dans lequel cette garniture (40a, 40b, 40c) est pourvue d'une couche de matériau esthétique extérieur (44a, 44b, 44c), et dans lequel cet élément en mousse est directement couplé à cette couche de matériau esthétique extérieur (44a, 44b, 44c).
